# EUROPÄISCHE PATENTSCHRIFT

(11) **EP 3 631 382 B1**
(45) Veröffentlichungstag und Bekanntmachung des Hinweises auf die Patenterteilung: **04.05.2022**
(21) Anmeldenummer: 18726765.3
(22) Anmeldetag: 17.05.2018
(51) Int. Cl.: G01N 27/72, G01V 3/08, G01F 23/26

(54) **VERFAHREN UND VORRICHTUNG ZUM BESTIMMEN EINES FÜLLSTANDS EINES LAGERBEHÄLTERS**
METHOD AND APPARATUS FOR DETERMINING A FILL LEVEL OF A STORAGE CONTAINER
PROCÉDÉ ET DISPOSITIF DE DÉTERMINATION D'UN NIVEAU DE REMPLISSAGE D'UN CONTENANT DE STOCKAGE

(30) Priorität: 30.05.2017 DE 102017111722
(43) Veröffentlichungstag der Anmeldung: 08.04.2020
(73) Patentinhaber: Fraunhofer-Gesellschaft zur Förderung der angewandten Forschung e.V., 80686 München (DE)
(72) Erfinder: PSIUK, Rafael, 90411 Nürnberg (DE); HUTHER, Mathis, 91058 Erlangen (DE); DRÄGER, Tobias, 91083 Baiersdorf (DE)
(74) Vertreter: 2SPL Patentanwälte PartG mbB
(86) Internationale Anmeldenummer: PCT/EP2018/062972
(87) Internationale Veröffentlichungsnummer: WO 2018/219678

(56) Entgegenhaltungen:
- WO-A1-2008/089302
- WO-A2-2013/188443
- WO-A2-2015/061642
- US-A1- 2002 156 557
- US-A1- 2005 007 239
- US-A1- 2006 053 880
- US-A1- 2016 238 426

## Beschreibung

### Technisches Gebiet

Die Erfindung befasst sich mit der Charakterisierung von Objekten mittels magnetischer Felder. Insbesondere befassen Ausführungsbeispiele sich mit einem Verfahren und einer Vorrichtung zum Bestimmen eines Füllstands eines Lagerbehälters.

### Hintergrund

Im Logistikbereich werden Gegenstände oftmals in Lagerbehältern transportiert, die nicht geöffnet werden dürfen bzw. nicht zerstörungsfrei geöffnet werden können. Die Überprüfung des Inhalts des Lagerbehälters kann daher mitunter aufwändig oder sogar unmöglich sein. Ebenso kann es von Interesse sein, die genaue Füllmenge eines Lagerbehälters zu kennen, bzw. die Zusammensetzung des Inhalts des Lagerbehälters zu kennen.

Generell kann es von Interesse sein, die materielle Zusammensetzung eines Objekts oder zumindest von Teilen davon zu kennen, um diese beispielsweise mit Hersteller- bzw. Lieferantenangaben abzugleichen. Beispielsweise werden in den Druckschriften US 2005/007239 A1, WO 2008/089302 A1 und WO 2013/188443 A2 auf Magnetfeldantworten basierende Messsysteme zur Messung des Flüssigkeitslevels in einem Behälter vorgeschlagen. Die Druckschrift US 2005/007239 offenbart ein Verfahren und eine Vorrichtung zum Bestimmen eines Füllstands eines Lagerbehälters, umfassend: Erzeugen eines magnetischen Erregerfeldes, wobei das magnetische Erregerfeld eingerichtet ist, einen Inhalt des Lagerbehälters zum Ausprägen eines magnetischen Antwortfeldes anzuregen, und wobei das Erzeugen des magnetischen Erregerfeldes ein Variieren einer Frequenz des magnetischen Erregerfeldes umfasst; Bestimmen einer Mehrzahl an Messwerten für das magnetische Antwortfeld für verschiedene Frequenzen des magnetischen Erregerfeldes umfasst; und Bestimmen des Füllstands des Lagerbehälters basierend auf einer Position des Lagerbehälters und einem Vergleich der Mehrzahl an Messwerten mit Referenzmesswerten, wobei den Referenzmesswerten jeweils ein Füllstand des Lagerbehälters zugeordnet ist, und wobei das Bestimmen des Füllstands des Lagerbehälters Folgendes umfasst: Bestimmen eines Phasengangs oder eines Amplitudengangs der Mehrzahl an Messwerten über die verschiedenen Frequenzen des magnetischen Erregerfeldes.

In der Lebensmittelindustrie ist es zudem essentiell, sicherzustellen, dass während des Herstellungsprozesses keine Fremdstoffe (z.B. Metallteile) in ein Lebensmittel gelangt sind.

Es besteht somit ein Bedürfnis, eine weitere Möglichkeit zur Charakterisierung eines Objekts bereitzustellen.

### Zusammenfassung

Ausführungsbeispiele eines Verfahrens zum Bestimmen eines Füllstands eines Lagerbehälters ermöglichen dies. Das Verfahren umfasst ein Erzeugen eines magnetischen Erregerfeldes. Das magnetische Erregerfeld ist eingerichtet, einen Inhalt des Lagerbehälters zum Ausprägen eines magnetischen Antwortfeldes anzuregen. Das Erzeugen des magnetischen Erregerfeldes umfasst dabei ein Variieren einer Frequenz des magnetischen Erregerfeldes. Ferner umfasst das Verfahren ein Bestimmen einer Mehrzahl an Messwerten für das magnetische Antwortfeld für verschiedene Frequenzen des magnetischen Erregerfeldes. Das Verfahren umfasst außerdem ein Bestimmen des Füllstands des Lagerbehälters basierend auf einer Position des Lagerbehälters und einem Vergleich der Mehrzahl an Messwerten mit Referenzmesswerten. Den Referenzmesswerten ist jeweils ein Füllstand des Lagerbehälters zugeordnet. Das Bestimmen des Füllstands des Lagerbehälters umfasst dabei ein Bestimmen eines Phasengangs und/oder eines Amplitudengangs der Mehrzahl an Messwerten über die verschiedenen Frequenzen des magnetischen Erregerfeldes. Ferner umfasst das Bestimmen des Füllstands des Lagerbehälters ein Bestimmen einer Ähnlichkeit des Phasengangs und/oder des Amplitudengangs der Mehrzahl an Messwerten zu einem Phasengang und/oder einem Amplitudengang zumindest eines Teils der Referenzmesswerte über die verschiedenen Frequenzen des magnetischen Erregerfeldes.

Weitere Ausführungsbeispiele betreffen eine Vorrichtung zum Bestimmen eines Füllstands eines Lagerbehälters. Die Vorrichtung umfasst ein Erregermodul, das eingerichtet ist, ein magnetisches Erregerfeld zu erzeugen. Das magnetische Erregerfeld ist eingerichtet, einen Inhalt des Lagerbehälters zum Ausprägen eines magnetischen Antwortfeldes anzuregen. Das Erregermodul ist dabei eingerichtet, eine Frequenz des magnetischen Erregerfeldes zu variieren. Ferner umfasst die Vorrichtung ein Messmodul, das eingerichtet ist, eine Mehrzahl an Messwerten für das magnetische Antwortfeld für verschiedene Frequenzen des magnetischen Erregerfeldes zu bestimmen. Die Vorrichtung umfasst zudem ein Auswertemodul, das eingerichtet ist, den Füllstand des Lagerbehälters basierend auf einer Position des Lagerbehälters und einem Vergleich der Mehrzahl an Messwerten mit Referenzmesswerten zu bestimmen. Den Referenzmesswerten ist jeweils ein Füllstand des Lagerbehälters zugeordnet. Dabei ist das Auswertemodul eingerichtet, einen Phasengang und/oder einen Amplitudengang der Mehrzahl an Messwerten über die verschiedenen Frequenzen des magnetischen Erregerfeldes zu bestimmen und eine Ähnlichkeit des Phasengangs und/oder des Amplitudengangs der Mehrzahl an Messwerten zu einem Phasen-gang und/oder einem Amplitudengang von zumindest einem Teil der Referenzmesswerte über die verschiedenen Frequenzen des magnetischen Erregerfeldes zu bestimmen.

### Figurenkurzbeschreibung

Ausführungsbeispiele werden nachfolgend bezugnehmend auf die beiliegenden Figuren näher erläutert. Es zeigen:
Fig. 1 zeigt ein Ablaufdiagramm eines Ausführungsbeispiels eines Verfahrens zum Charakterisieren eines Objekts;
Fig. 2 zeigt ein Ablaufdiagramm eines Ausführungsbeispiels eines nicht erfindungsgemäßen Verfahrens zum Bestimmen einer Zusammensetzung eines Objekts;
Fig. 3 zeigt ein Ablaufdiagramm eines Ausführungsbeispiels eines nicht erfindungsgemäßen Verfahrens zum Erkennen eines elektrisch leitfähigen und/oder magnetisch permeablen Objekts in einem Gegenstand;
Fig. 4 zeigt ein Ausführungsbeispiel einer Vorrichtung zum Charakterisieren eines Objekts;
Fig. 5 zeigt ein weiteres Ausführungsbeispiel einer Vorrichtung zum Charakterisieren eines Objekts;
Fig. 6 zeigt ein Ausführungsbeispiel einer nicht erfindungsgemäßen Vorrichtung zum Bestimmen einer Zusammensetzung eines Objekts;
Fig. 7 zeigt ein Ausführungsbeispiel einer nicht erfindungsgemäßen Vorrichtung zum Erkennen eines elektrisch leitfähigen und/oder magnetisch permeablen Objekts in einem Gegenstand.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

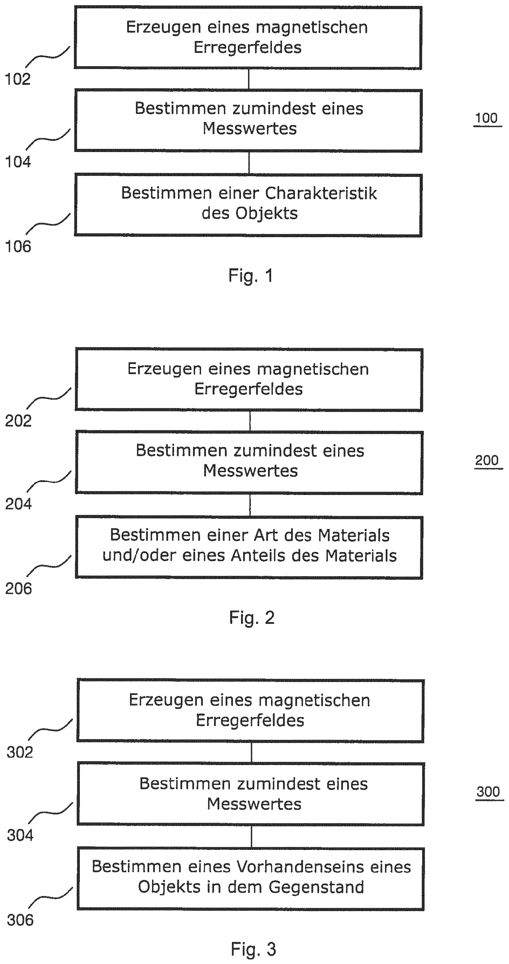

**Fig. 1** zeigt ein Verfahren 100 zum Charakterisieren eines Objekts. Das Verfahren 100 umfasst ein Erzeugen 102 eines magnetischen Erregerfeldes. Das magnetische Erregerfeld ist dabei eingerichtet, das Objekt zum Ausprägen eines magnetischen Antwortfeldes anzuregen. Ferner umfasst das Verfahren 100 ein Bestimmen 104 zumindest eines Messwertes für das magnetische Antwortfeld. Weiterhin umfasst das Verfahren 100 ein Bestimmen 106 einer Charakteristik des Objekts basierend auf einer Position des Objekts und einem Vergleich des zumindest einen Messwerts mit Referenzmesswerten. Den Referenzmesswerten ist dabei jeweils eine Charakteristik des Objekts zugeordnet.

Das Verfahren 100 kann eine nicht-invasive Charakterisierung des Objekts ermöglichen. Das magnetische Antwortfeld ist charakteristisch für ein Objekt (z.B. aufgrund seiner Form, seiner Zusammensetzung oder seiner Ausrichtung). Aus der (bekannten) Position des Objekts kann der Abstand des Objekts zur Messposition für das magnetische Antwortfeld bzw. zu einer Position der Erzeugung des magnetischen Erregerfeldes bestimmt werden. Der Abstand des Objekts zu diesen beiden Positionen beeinflusst das durch das Objekt ausgeprägte magnetische Antwortfeld als auch dessen Messwert. Unter Berücksichtigung der Position des Objekts kann daher aufgrund der Referenzmesswerte die Charakteristik des Objekts bestimmt werden, ohne dass das Objekt geöffnet, zerlegt, beschädigt bzw. zerstört werden muss. Zudem kann eine aufwändige manuelle Charakterisierung des Objekts entfallen, so dass die Charakterisierung des Objekts in Echtzeit möglich ist.

Bei dem Objekt kann es sich um jegliches Objekt handeln, dass als Reaktion auf ein magnetisches Erregerfeld ein magnetisches Antwortfeld ausprägen bzw. erzeugen kann. Beispielsweise kann Objekt ein elektrisch leitfähiges und/oder magnetisch permeables Objekt sein. Das Objekt kann aus einem oder mehreren Teilobjekten bzw. Bestandteilen bestehen oder aufgebaut sein. Dabei können die Teilobjekte gleichartig aber auch verschieden voneinander sein. Bei dem Objekt kann es sich um ein Objekt, das als solches als Reaktion auf ein magnetisches Erregerfeld ein magnetisches Antwortfeld ausprägen bzw. erzeugen kann, als auch um ein Objekt, das eine Komponente (Element, Vorrichtung) umfasst bzw. mit dieser gekoppelt ist, welche als Reaktion auf ein magnetisches Erregerfeld ein magnetisches Antwortfeld ausprägen bzw. erzeugen kann, handeln. Beispielsweise kann das Objekt eine Schraube, ein Stück Metall oder der Inhalt eines Lagerbehälters sein.

Das magnetische Erregerfeld kann jedes magnetische Feld sein, welches das Objekt zum Ausprägen eines magnetischen Antwortfeldes anregen kann. Beispielsweise kann es sich bei dem magnetischen Erregerfeld um ein magnetisches Wechselfeld handeln. Ein magnetisches Wechselfeld kann beispielsweise mittels wechselstromdurchflossener Spulen oder Leiterschleifen erzeugt werden. Das magnetische Erregerfeld kann dabei eine oder mehrere Frequenzkomponenten umfassen. Auch kann eine Frequenz des magnetischen Erregerfelds variieren.

Der zumindest eine Messwert für das magnetische Antwortfeld repräsentiert den Zustand des magnetischen Antwortfeldes an einer vorbestimmten Messposition. Beispielsweise kann der zumindest eine Messwert die Amplitude und/oder Phase des Antwortfeldes an der vorbestimmten Messposition angeben. Basierend auf einer gewünschten Genauigkeit der zu bestimmenden Charakteristik des Objekts kann die Anzahl der Messpunkte gewählt werden. Beispielsweise kann das magnetische Antwortfeld an zwei, drei, vier, fünf oder mehr verschiedenen Positionen gemessen werden. Dabei können nicht nur Amplitude und Phase des magnetischen Antwortfeldes gemessen werden, sondern auch die einzelnen Feldkomponenten (d.h. in x, y, und z-Richtung), um so einen Feldvektor an der Messposition zu bestimmen. Um das magnetische Antwortfeld zu messen, können z.B. eine oder mehrere Empfangsantennen jeweils an einer Messposition angeordnet sein. Eine in der Empfangsantenne induzierte Spannung ist dabei proportional zur lokalen Amplitude und/oder Phase des magnetischen Antwortfeldes an der Messposition. Alternativ kann z.B. auch ein Hall-Sensor oder jedes sonstige geeignete Magnetometer verwendet werden, um den zumindest einen Messwert für das magnetische Antwortfeld zu bestimmen.

Die Referenzmesswerte können z.B. mittels Referenzmessungen an einem Objekt mit einer bestimmten Eigenschaft erhalten werden. Alternativ oder ergänzend können Referenzmesswerte auch mittels einer Simulation des Verhaltens eines Objekts mit einer bestimmten Charakteristik in dem magnetischen Erregerfeld erhalten werden. Den Referenzmesswerten können dabei weiterhin Informationen über einen Abstand des Objekts der Referenzmessung/Simulation zur Messposition für das magnetische Antwortfeld bzw. zu einer Position der Erzeugung des magnetischen Erregerfeldes in der Referenzmessung/Simulation zugeordnet sein. Derart kann die Position des Objekts bei der Messung mit der Position des Objekts in den Referenzmessungen korreliert werden. Beispielsweise kann basierend auf einer Korrelation der Positionen eine Skalierung des Messwerts und/oder der Referenzmesswerte erfolgen und der oder die skalierten Werte dann verglichen werden.

Erfindungsgemäß ist das Objekt der Inhalt eines Lagerbehälters, wobei die Charakteristik des Objekts ein Füllstand des Lagerbehälters ist. Der Lagerbehälter kann dabei jeglicher Behälter sein, der sowohl von dem magnetischen Erregerfeld als auch von dem magnetischen Antwortfeld durchdrungen werden kann. Der Lagerbehälter kann sowohl zur Aufnahme von Feststoffen, Flüssigkeiten als auch Gasen geeignet sein, so dass das Objekt ein Feststoff, eine Flüssigkeit oder auch ein Gas sein kann. Der Lagerbehälter kann dabei sowohl offen als auch verschlossen sein. Ferner kann der Lagerbehälter zerstörungsfrei als auch nur durch Zerstörung desselben zu öffnen sein.

In nicht erfindungsgemäßen Ausführungsbeispielen kann die Charakteristik des Objekts auch eine Art des Objekts sein. Beispielsweise kann die Art des Objekts angeben, um welchen Gegenstand es sich handelt (z.B. Schraube, Metallblech, Akkumulator), welche Form (Geometrie) das Objekt aufweist (lang, kurz, groß, klein, rund, eckig, flächig, Vollkörper, Hohlkörper etc.), aus welchem bzw. welchen Materialen das Objekt aufgebaut ist (z.B. bestimmtes Metall). Die vorgenannten Charakteristiken bedingen nämlich jeweils ein charakteristisches magnetisches Antwortfeld des Objekts. Befindet sich das Objekt z.B. in einem Lagerbehälter, kann derart der Inhalt des Lagerbehälters nicht-invasiv, d.h. ohne den Lagerbehälter öffnen oder zerstören zu müssen, charakterisiert werden.

Die Charakteristik des Objekts kann in nicht erfindungsgemäßen Ausführungsbeispielen auch eine Zusammensetzung des Objekts sein ist. Die Zusammensetzung des Objekts zeigt z.B. an, aus welchem bzw. welchen Materialen das Objekt aufgebaut ist oder welchen Anteil die Materialien am Objekt haben. So prägen z.B. unterschiedliche Legierungen verschiedene charakteristische magnetische Antwortfelder aus. Aus dem gemessenen magnetischen Antwortfeld kann daher auf eine bestimmte Legierung geschlossen werden. Falls das Objekt aus Teilobjekten aufgebaut ist, kann die Charakteristik des Objekts anzeigen, ob es sich um identische bzw. verschiedene Teilobjekte handelt, da die Teilobjekte jeweils ein charakteristisches magnetisches Antwortfeld ausprägen. Ist das Objekt z.B. der Inhalt eines Lagerbehälter, kann derart bestimmt werden, ob sich identische bzw. verschiedene (und welche) Gegenstände im Lagerbehälter befinden, ohne den Lagerbehälter öffnen oder zerstören zu müssen.

Auch kann die Charakteristik des Objekts in nicht erfindungsgemäßen Ausführungsbeispielen eine Ausrichtung des Objekts (stehend, liegend, in der richtigen/falschen Position etc.) sein. Je nach Ausrichtung des Objekts prägt das Objekt unterschiedliche magnetische Antwortfelder aus. Aus dem gemessenen magnetischen Antwortfeld kann daher auf die Orientierung des Objekts geschlossen werden. Befindet sich das Objekt z.B. in einem Lagerbehälter, kann derart auf die Ausrichtung des Objekts in dem Lagerbehälter geschlossen werden, ohne den Lagerbehälter öffnen oder zerstören zu müssen. Besteht das Objekt in dem Lagerbehälter aus mehreren Teilobjekten, so prägt jedes dieser Teilobjekte abhängig von seiner Ausrichtung jeweils ein charakteristisches magnetisches Antwortfeld aus. Aus den gemessenen magnetischen Antwortfeldern der Teilobjekte kann daher auf die Ausrichtung der Teilobjekte geschlossen werden. So kann z.B. bestimmt werden, ob alle Teilobjekte in dem Lagerbehälter gleich ausgerichtet sind. Beispielsweise kann so bestimmt werden, ob eines oder mehrere Teilobjekte in dem Lagerbehälter umgekippt sind.

Das magnetische Antwortfeld eines Objekts ist zu einem wesentlichen Teil durch oberflächennahe Bereiche (im Inneren) des Objekts, d.h. insbesondere durch eine Beschichtung des Objekts, bestimmt. Unterschiedlich dicke Beschichtungen des Objekts erzeugen somit verschiedene magnetische Antwortfelder, die charakteristisch für die jeweilige Dicke der Beschichtung sind. Da die Ausprägung des magnetischen Antwortfeldes insbesondere durch oberflächennahe Bereiche (im Inneren) des Objekts bestimmt ist, kann die Charakteristik in nicht erfindungsgemäßen Ausführungsbeispielen auch die Dicke einer Beschichtung des Objekts sein. Das magnetische Erregerfeld regt dabei die Beschichtung zum Ausprägen des magnetischen Antwortfeldes an. Basierend auf dem Vergleich des zumindest einen Messwerts mit Referenzmesswerten, denen jeweils eine Dicke der Beschichtung zugeordnet ist, kann nicht-invasiv und in Echtzeit die Dicke der Beschichtung bestimmt werden.

Der Vergleich des zumindest einen Messwertes für das magnetische Antwortfeld mit Referenzmesswerten kann z.B. durch einen Vergleich des Messwerts mit in einer Tabelle gespeicherten Referenzmesswerten erfolgen. Dazu kann z.B. eine Ähnlichkeit oder Übereinstimmung zwischen dem Messwert und den Referenzmesswerten bestimmt werden. Basierend auf den Vergleichsergebnissen kann beispielsweise die einem Referenzwert zugeordnete Charakteristik als Charakteristik des Objekts bestimmt werden. Ein Referenzwert und dessen zugeordnete Charakteristik können z.B. als Zweier-Tupel in einer Tabelle gespeichert sein. Einem Referenzwert können dabei auch mehrere Charakteristika zugeordnet sein. Entsprechend kann der Vergleich der Mehrzahl an Messwerten mit Referenzmesswerten z.B. ein Durchsuchen einer Tabelle umfassen.

Das Bestimmen der Ähnlichkeit des zumindest einen Messwertes zu einem der Referenzmesswerte kann dabei ein Vergleichen einer Amplitude des Messwertes mit einer Amplitude eines der Referenzmesswerte umfassen. Alternative oder ergänzend kann das Bestimmen der Ähnlichkeit des zumindest einen Messwertes zu einem der Referenzmesswerte ein Vergleichen einer Phase des Messwertes mit einer Phase eines der Referenzmesswerte umfassen. Unterschiedliche Objekte (z.B. unterschiedliche Inhalte eines Lagerbehälters) erzeugen jeweils charakteristische Phasenlagen des magnetischen Antwortfeldes. So erzeugen z.B. kurze Schrauben eine andere Phasenlage als lange Schrauben. Ebenso ist die Amplitude des magnetischen Antwortfeldes von der Masse bzw. Menge des Objekts abhängig. Ist das Objekt ein bestimmtes Schüttgut in einem Lagerbehälter hat das magnetische Antwortfeld beispielsweise bei einem zu einem Viertel mit dem Schüttgut gefüllten Lagerbehälter eine geringere Amplitude als bei einem zur Hälfte mit dem Schüttgut gefüllten Lagerbehälter. Durch den Vergleich von Phase und/oder Amplitude des Messwertes mit der Phase und/oder Amplitude der Referenzmesswerte kann somit der Inhalt des Lagerbehälters charakterisiert werden. Beispielsweise kann so auch bestimmt werden, ob ein Lagerbehälter kurze Schrauben oder lange Schrauben/große oder kleine Kugeln/großflächige oder kleinflächige Bleche etc. beinhaltet.

Wie bereits oben angedeutet kann das Erzeugen 102 des magnetischen Erregerfeldes ein Variieren einer Frequenz des magnetischen Erregerfeldes umfassen. Beispielsweise können einer oder mehrere vorbestimmte Frequenzbereiche durchfahren werden. Um die Frequenz des magnetischen Erregerfeldes zu variieren, kann beispielsweise die Frequenz des Stroms in wechselstromdurchflossenen Spulen oder Leiterschleifen variiert werden.

Das Bestimmen 104 zumindest eines Messwertes für das magnetische Antwortfeld kann dann entsprechend ein Bestimmen einer Mehrzahl an Messwerten für das magnetische Antwortfeld für verschiedene Frequenzen des magnetischen Erregerfeldes umfassen. Das heißt, für unterschiedliche Frequenzen des magnetischen Erregerfeldes können einer oder mehrere Messwerte für das magnetische Antwortfeld bestimmt werden. Das Bestimmen 106 der Charakteristik des Objekts kann dann ein Bestimmen eines Phasengangs und/oder eines Amplitudengangs der Mehrzahl an Messwerten über die verschiedenen Frequenzen des magnetischen Erregerfeldes umfassen. Der Gang bzw. Verlauf der Phase bzw. Amplitude des magnetischen Antwortfeldes ist charakteristisch für ein Objekt. Unterschiedliche Objekte prägen magnetische Antwortfelder mit unterschiedlichen Phasengängen/Phasenverläufen über die verschiedenen Frequenzen des magnetischen Erregerfeldes aus. Entsprechend kann das Bestimmen 106 der Charakteristik des Objekts ein Bestimmen der Ähnlichkeit des Phasengangs und/oder des Amplitudengangs der Mehrzahl an Messwerten zu einem Phasen-gang und/oder einem Amplitudengang zumindest eines Teils der Referenzmesswerte über die verschiedenen Frequenzen des magnetischen Erregerfeldes umfassen. Durch den Vergleich des gemessen Phasen- und/oder Amplitudengangs mit den Referenzphasen- und/oder Referenzamplitudengängen kann dem Objekt mit erhöhter Genauigkeit/Robustheit eine Charakteristik zugeordnet werden. Beispielsweise kann derart die Art des Objekts (etwa Inhalt eines Lagerbehälters), oder die Zusammensetzung des Objekts (z.B. des Inhalts eines Lagerbehälters) bestimmt werden. Bezugnehmend auf das obige Schraubenbeispiel kann derart z.B. bestimmt werden, ob der Lagerbehälter kurz oder lange Schrauben beinhaltet, bzw. in welchem Verhältnis der Lagerbehälter kurze und lange Schrauben beinhaltet.

Das Bestimmen 104 des zumindest einen Messwertes für das magnetische Antwortfeld kann auch ein Bestimmen einer Mehrzahl an Messwerten für das magnetische Antwortfeld für verschiedene Ausrichtungen des Objekts relativ zu dem magnetischen Erregerfeld umfassen. Dazu kann beispielsweise das Objekt bei einem stationären magnetischen Erregerfeld gedreht werden. Alternativ kann die Ausrichtung des magnetischen Erregerfelds gedreht werden. Dazu kann das magnetische Erregerfeld z.B. über eine Mehrzahl an orthogonal zu einander angeordneten Spulen erzeugt werden. Durch eine entsprechende Ansteuerung der Mehrzahl an Spulen kann die räumliche Ausrichtung des magnetischen Erregerfelds relativ zu dem Objekt geändert werden (z.B. kann das magnetische Erregerfeld gedreht werden). Alternativ kann der Erzeuger des magnetischen Erregerfelds relativ zu dem Objekt bewegt werden. Das Bestimmen 106 der Charakteristik des Objekts umfasst dann ein Bestimmen der Charakteristik des Objekts basierend auf einem Vergleich der Mehrzahl an Messwerten mit den Referenzmesswerten. Das magnetische Antwortfeld eines Objekts hängt von seiner relativen Orientierung zum magnetischen Erregerfeld ab. Entsprechend kann durch die Auswertung der Mehrzahl an Messwerten für verschiedene Ausrichtungen des Lagerbehälters relativ zu dem magnetischen Erregerfeld, die Ausrichtung des Inhalts des Lagerbehälters bestimmt werden. Besteht das Objekt aus mehreren gleichartigen Teilobjekten, kann derart z.B. auch bestimmt werden, ob die Teilobjekte alle gleich oder verschieden ausgerichtet sind.

In oben genanntem Beispiel kann die Ansteuerung der Mehrzahl an Spulen basierend auf der Position des Objekts, d.h. basieren auf einem räumlichen Abstand des Objekts zu dem Erzeuger (Erregermodul) des magnetischen Erregerfeldes und/oder einem räumlichen Abstand des Lagerbehälters zu der Messposition (Messmodul) des magnetischen Antwortfeldes für die Bestimmung des Messwertes des magnetischen Antwortfeldes erfolgen. Durch die Einbeziehung der Position des Objekts relativ zur Erzeugungsposition des magnetischen Erregerfeldes und/oder der Messposition des magnetischen Antwortfeldes kann der Schaltungsaufwand für das Drehen des magnetischen Erregerfelds reduziert werden.

Durch eine entsprechende Ansteuerung der Mehrzahl an Spulen kann die räumliche Ausrichtung des magnetischen Erregerfelds relativ zu dem Lagerbehälter geändert werden (z.B. kann das magnetische Erregerfeld gedreht werden).

Um die Charakterisierung des Objekts zu ermöglichen, kann der das Objekt mit einem Material versetzt sein, das mit dem magnetischen Erregerfeld in vorbestimmter Weise wechselwirkt, um eine vorbestimmte Charakteristik des Objekts anzuzeigen. Beispielsweise kann das Objekt mit einer Schicht aus einem bestimmten elektrisch leitfähigen oder magnetisch permeablen Material überzogen sein, oder einer Schicht des Objekts können entsprechende Partikel beigemischt sein. Beispielsweise können der Lackschicht eines Objekts in einem Lagerbehälter Partikel bestimmter elektrisch leitfähiger oder magnetisch permeabler Materialien beigemischt sein, um die Farbe der Lackschicht zu kodieren. Alternativ kann ein Objekt auch mit einem Element (z.B. Anhänger, Aufkleber, weiteres Element aus diesem Material) gekoppelt sein, um eine Charakteristik des Objekts zu kodieren (z.B. Besitzer, Absender, Empfänger, Farbe). Beispielsweise kann dem Inhalt eines Lagerbehälters eine vorbestimmte Menge eines bestimmten elektrisch leitfähigen oder magnetisch permeablen Materials beigemengt sein, um eine Charakteristik des Inhalts (d.h. des Objekts) zu kodieren.

Weiterhin kann auch die stoffliche Zusammensetzung eines Objekts bestimmt werden. Ein nicht erfindungsgemäßes Verfahren 200 zum Bestimmen einer Zusammensetzung eines Objekts ist in Fig. 2 gezeigt. Das Verfahren 200 umfasst ein Erzeugen 202 eines magnetischen Erregerfeldes. Das magnetische Erregerfeld ist dabei eingerichtet, ein Material des Objekts zum Ausprägen eines magnetischen Antwortfeldes anzuregen. Zudem umfasst das Verfahren 200 ein Bestimmen 204 zumindest eines Messwertes für das magnetische Antwortfeld. Das Verfahren 200 umfasst weiterhin ein Bestimmen 206 einer Art des Materials und/oder eines Anteils des Materials an dem Objekt basierend auf einem Vergleich des zumindest einen Messwerts mit Referenzmesswerten. Den Referenzmesswerten ist dabei jeweils eine Art des Materials und/oder ein Anteil des Materials an dem Objekt zugeordnet.

Voneinander verschiedene Materialien erzeugen unterschiedliche magnetische Antwortfelder in Anwesenheit eines magnetischen Erregerfeldes. Dieses Verhalten wird durch das Verfahren 200 genutzt, um das Vorhandensein eines Materials in/an dem Objekt zu bestimmen/nachzuweisen. Derart kann somit die stoffliche Zusammensetzung des Objekts bestimmt werden.

Das magnetische Erregerfeld kann jedes magnetische Feld sein, welches das Material zum Ausprägen eines magnetischen Antwortfeldes anregen kann. Insbesondere kann dabei wiederum die Frequenz des magnetischen Erregerfeldes variiert werden. Es versteht sich von selbst, dass entsprechend auch einer oder mehrere Messwerte für das magnetische Antwortfeld für die verschiedenen Frequenzen des magnetischen Erregerfeldes bestimmt werden können. Aus diesen kann - wie bereits zu Verfahren 100 ausgeführt - ein Phasengang und/oder ein Amplitudengang des magnetischen Antwortfeldes bestimmt werden, der mit Referenzphasen- und/oder Referenzamplitudengängen verglichen werden kann. Allgemein kann der Vergleich des zumindest einen Messwerts mit den Referenzmesswerten gemäß den in Zusammenhang mit Verfahren 100 gezeigten Grundsätzen erfolgen. Um Wiederholungen zu vermeiden, so auf die obigen Ausführungen zum Verfahren 100 verwiesen.

Für das Bestimmen der Zusammensetzung des Objekts kann optional auch die Position des Objekts berücksichtigt werden, wie dies oben im Zusammenhang mit Verfahren 100 ausgeführt ist.

Auch die Referenzmesswerte können wiederum über Referenzmessungen oder mittels einer Simulation ermittelt werden.

Beispielsweise kann mit dem Verfahren 200 die Zusammensetzung einer Legierung geprüft werden. Die einzelnen Metalle der Legierung weisen ein charakteristisches Phasenverhalten hinsichtlich des magnetischen Antwortfeldes auf (z.B. einen charakteristischen Phasen-gang), über welches auf die Art des Metalls geschlossen werden kann. Der Anteil des Metalls an der Legierung beeinflusst zu dem das Amplitudenverhalten des magnetischen Antwortfeldes (z.B. Amplitudengang). Aus dem Amplitudenverhalten kann dann wiederum auf den Anteil des Metalls in der Legierung geschlossen werden.

Durch das Vorhalten der Referenzmesswerte, welchen jeweils die Art des Materials und/oder der Anteil des Materials an dem Objekt zugeordnet ist, kann nicht-invasiv und in Echtzeit die stoffliche Zusammensetzung des Objekts bestimmt werden mittels des Verfahrens 200.

Weiterhin können elektrisch leitfähige und/oder magnetisch permeable Objekte (z.B. metallische Objekte) in einem Gegenstand erkannt werden. Insbesondere können metallische Gegenstände in Lebensmitteln erkannt werden. Ein nicht erfindungsgemäßes Verfahren 300 zum Erkennen eines elektrisch leitfähigen und/oder magnetisch permeablen Objekts in einem Gegenstand ist in Fig. 3 gezeigt. Das Verfahren 300 umfasst ein Erzeugen 302 eines magnetischen Erregerfeldes. Das magnetische Erregerfeld ist dabei eingerichtet, ein elektrisch leitfähiges und/oder magnetisch permeables Objekt in dem Gegenstand zum Ausprägen eines magnetischen Antwortfeldes anzuregen. Ferner umfasst das Verfahren 300 ein Bestimmen 304 zumindest eines Messwertes für das magnetische Antwortfeld. Das Verfahren 300 umfasst weiterhin ein Bestimmen 306 eines Vorhandenseins eines elektrisch leitfähigen und/oder magnetisch permeablen Objekts in dem Gegenstand basierend auf einem Vergleich des zumindest einen Messwerts mit Referenzmesswerten. Die Referenzmesswerte zeigen dabei jeweils das Vorhandensein eines elektrisch leitfähigen und/oder magnetisch permeablen Objekts an.

Das magnetische Antwortfeld des Gegenstands ist verschieden bei An- bzw. Abwesenheit eines elektrisch leitfähigen und/oder magnetisch permeablen Objekts in dem Gegenstand. Entsprechend kann durch den Vergleich mit den Referenzmesswerten nicht-invasiv und in Echtzeit festgestellt werden, ob der Gegenstand ein elektrisch leitfähiges und/oder magnetisch permeables Objekt enthält. Das Verfahren 300 ermöglicht somit eine einfache Prüfung auf das Vorhandensein von metallischen Objekten in einem Gegenstand.

Das magnetische Erregerfeld kann dabei jedes magnetische Feld sein, welches ein elektrisch leitfähiges und/oder magnetisch permeables Objekt zum Ausprägen eines magnetischen Antwortfeldes anregen kann. Insbesondere kann dabei wiederum die Frequenz des magnetischen Erregerfeldes variiert werden. Es versteht sich von selbst, dass entsprechend auch einer oder mehrere Messwerte für das magnetische Antwortfeld für die verschiedenen Frequenzen des magnetischen Erregerfeldes bestimmt werden können. Aus diesen kann - wie bereits zu Verfahren 100 ausgeführt - ein Phasengang und/oder ein Amplitudengang des magnetischen Antwortfeldes bestimmt werden, der mit Referenzphasen- und/oder Referenzamplitudengängen verglichen werden kann. Allgemein kann der Vergleich des zumindest einen Messwerts mit den Referenzmesswerten gemäß den in Zusammenhang mit Verfahren 100 gezeigten Grundsätzen erfolgen. Um Wiederholungen zu vermeiden, so auf die obigen Ausführungen zum Verfahren 100 verwiesen.

Auch die Referenzmesswerte können wiederum über Referenzmessungen oder mittels einer Simulation ermittelt werden.

Für das Bestimmen des Vorhandenseins eines elektrisch leitfähigen und/oder magnetisch permeablen Objekts in dem Gegenstand kann optional auch die Position des Gegenstands berücksichtigt werden, wie dies oben im Zusammenhang mit Verfahren 100 ausgeführt ist.

Wie bereits oben angedeutet, kann das Objekt z.B. ein Lebensmittel sein. Derart kann bei z.B. einer Zwischen- oder Endkontrolle in einem Lebensmittelproduktionsbetrieb auf einfache Art und Weise geprüft werden, ob während des (bisherigen) Herstellungsprozesseses Metallteile (z.B. von Produktionsanlagen) in das Lebensmittel gelangt sind. Da das Verfahren 300 eine nicht-invasive Prüfung ermöglicht, können so auch bereits verpackte Lebensmittel geprüft werden (z.B. auch durch einen Verkäufer oder Zwischenhändler der Lebensmittel).

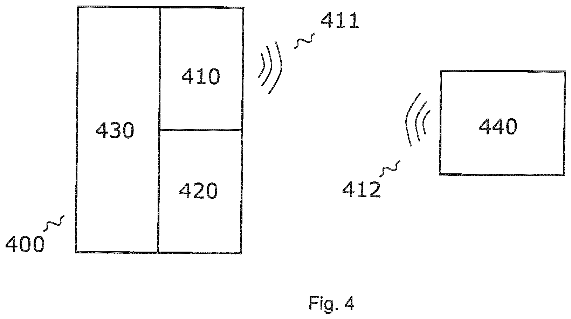

Vorrichtungen zum Durchführen der oben beschriebenen Verfahren werden nachfolgend unter Bezugnahme auf die Figs. 4 bis 7 näher beschrieben.

Dabei zeigt Fig. 4 eine Vorrichtung 400 zum Charakterisieren eines Objekts 440. Die Vorrichtung 400 umfasst ein Erregermodul 410, das eingerichtet ist, ein magnetisches Erregerfeld 411 zu erzeugen. Das magnetische Erregerfeld 411 ist dabei eingerichtet, Objekt 440 zum Ausprägen eines magnetischen Antwortfeldes 412 anzuregen. Ferner umfasst die Vorrichtung 400 ein Messmodul 420, das eingerichtet ist, zumindest einen Messwert für das magnetische Antwortfeld 412 zu bestimmen. Weiterhin umfasst die Vorrichtung 400 ein Auswertemodul 430, das eingerichtet ist, eine Charakteristik des Objekts 440 basierend auf einer Position des Objekts 440 und einem Vergleich des zumindest einen Messwerts mit Referenzmesswerten zu bestimmen. Den Referenzmesswerten ist dabei jeweils eine Charakteristik des Objekts 440 zugeordnet.

Die Vorrichtung 400 kann eine nicht-invasive Charakterisierung des Objekts 440 ermöglichen. Unter Berücksichtigung der Position des Objekts 440 kann aufgrund der Referenzmesswerte die Charakteristik des Objekts 440 bestimmt werden, ohne dass das Objekt 440 geöffnet, zerlegt, beschädigt bzw. zerstört werden muss. Zudem kann eine aufwändige manuelle Charakterisierung des Objekts 440 entfallen, so dass die Charakterisierung des Objekts 440 in Echtzeit möglich ist.

Erfindungsgemäß ist das Objekt 440 der Inhalt eines Lagerbehälters, wobei mit der Vorrichtung 400 ein Füllstand des Lagerbehälters bestimmt wird. In nicht erfindungsgemäßen Ausführungsbeispielen kann eine Art des Objekts 440 (welcher Gegenstand, welches Material, welche Form etc.), eine Zusammensetzung des Objekts 440 (z.B. Anteile verschiedener Teilobjekte oder Materialien am Objekt 440) oder eine Ausrichtung des Objekts 440 (stehend, liegend, Teilobjekte identisch ausgerichtet etc.) bestimmt werden.

Wie vorangehend bereits angedeutet, kann es sich bei dem bei dem Objekt 440 um jegliches Objekt handeln, dass als Reaktion auf das magnetisches Erregerfeld 411 ein magnetisches Antwortfeld ausprägen bzw. erzeugen kann.

Das Erregermodul 410 kann dabei eingerichtet sein, das magnetische Erregerfeld 411 gemäß den vorbeschriebenen Grundsätzen zu erzeugen und in seiner Umgebung auszuprägen. Insbesondere kann das Erregermodul 410 dazu eine oder mehrere Spulen, eine oder mehrere Leiterschleifen bzw. eines oder mehrere Spulensystem umfassen, welche von einem elektrischen Strom durchflossen sind.

Das Messmodul 420 kann dabei eingerichtet sein, das magnetische Antwortfeld 412 gemäß den vorbeschriebenen Grundsätzen zu empfangen und zumindest einen Messwert für das magnetische Antwortfeld 412 zu bestimmen. Insbesondere kann das Messmodul 420 eine oder mehrere Empfangsantennen umfassen, welche an einer oder mehreren vorbestimmten Messpositionen angeordnet sind. Dabei können an der einen oder den mehreren vorbestimmten Messpositionen sowohl eine einzelne Messantenne als auch mehrere Messantennen angeordnet sein. Alternativ kann das Messmodul 420 z.B. auch einen oder mehrere Hall-Sensoren oder jedes sonstige geeignete Magnetometer umfassen, um den zumindest einen Messwert für das magnetische Antwortfeld zu bestimmen. Das Messmodul 420 kann ferner eine oder mehrere geeignete Ausleseelektronik(en) umfassen, um die von der bzw. den Empfangsantennen gemessen Signale für die Weiterverarbeitung durch das Auswertemodul 430 aufzubereiten. Beispielswese kann eine Ausleseelektronik gemessene Signale filtern, verstärken, (komplex) mischen und/oder digitalisieren.

Das Auswertemodul 430 kann dabei eingerichtet sein, die Charakteristik des Objekts 440 gemäß den vorbeschriebenen Grundsätzen aus der Position des Objekts 440, dem zumindest einen Messwert und den Referenzmesswerten zu bestimmen. Dazu kann das Auswertemodul beispielsweise einen Prozessor, einen Computerprozessor (engl. CPU = Central Processing Unit), einen Grafikprozessor (engl. GPU = Graphics Processing Unit), einen Computer, ein Computersystem, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (FPGA = Field Programmable Gate Array) aufweisen, auf dem Software für die Steuerung des Auswertemodul 430 gemäß dem obigen Grundsätzen abläuft. Ferner kann das Auswertemodul 430 einen oder mehrere Speicher aufweisen, in denen z.B. Software für die Steuerung des Auswertemodul 430, die Referenzmesswerte oder sonstige Daten gespeichert sein können.

Die Position des Objekts 440 kann z.B. durch eine Messeinrichtung (nicht gezeigt) der Vorrichtung 400 bestimmt werden. Die Messeinrichtung kann dazu jede geeignete Messtechnik verwenden (z.B. Laser, Radar, Bildauswertung etc.).

Beispielsweise kann das Erregermodul 410 eingerichtet sein, eine Frequenz des magnetischen Erregerfeldes 411 zu variieren. Weiterhin kann das Messmodul 420 eingerichtet sein, eine Mehrzahl an Messwerten für das magnetische Antwortfeld 412 für verschiedene Frequenzen des magnetischen Erregerfeldes 411 zu bestimmen. Das Auswertemodul 430 kann ferner eingerichtet sein, einen Phasengang und/oder einen Amplitudengang der Mehrzahl an Messwerten über die verschiedenen Frequenzen des magnetischen Erregerfeldes 411 zu bestimmen und eine Ähnlichkeit des Phasengangs und/oder des Amplitudengangs der Mehrzahl an Messwerten zu einem Phasengang und/oder einem Amplitudengang von zumindest einem Teil der Referenzmesswerte über die verschiedenen Frequenzen des magnetischen Erregerfeldes 411 zu bestimmen. Durch den Vergleich des gemessen Phasen-und/oder Amplitudengangs mit den Referenzphasen- und/oder Referenzamplitudengängen kann dem Objekt mit erhöhter Genauigkeit/Robustheit eine Charakteristik zugeordnet werden. Beispielsweise kann derart die Art des Objekts 440, oder die Zusammensetzung des Objekts 440 bestimmt werden. Bezugnehmend auf das obige Schraubenbeispiel kann derart z.B. bestimmt werden, ob ein Lagerbehälter kurze oder lange Schrauben beinhaltet, bzw. in welchem Verhältnis der Lagerbehälter kurze und lange Schrauben beinhaltet.

Ferner kann die Vorrichtung 400 ausgebildet sein, das Erregermodul 410 und das Messmodul 420 relativ zu dem Objekt 440 zu bewegen. Alternativ kann das Erregermodul 410 eine Mehrzahl an orthogonal zu einander angeordneten Spulen sowie eine Steuerschaltung umfassen. Dabei ist die Steuerschaltung eingerichtet, die Mehrzahl an Spulen anzusteuern, um eine räumliche Ausrichtung des magnetischen Erregerfelds 411 relativ zu dem Objekt 440 zu ändern (z.B. das magnetische Erregerfeld 411 relativ zu dem Objekt 440 zu drehen). Das Messmodul 420 ist dann eingerichtet, eine Mehrzahl an Messwerten für das magnetische Antwortfeld 412 für verschiedene Ausrichtungen des Objekts 440 relativ zu dem magnetischen Erregerfeld 411 zu bestimmen. Dabei ist das Auswertemodul 430 eingerichtet, die Charakteristik des Objekts 440 basierend auf einem Vergleich der Mehrzahl an Messwerten mit den Referenzmesswerten zu bestimmen. Das magnetische Antwortfeld des Objekts 440 hängt von seiner relativen Orientierung zum magnetischen Erregerfeld 411 ab. Entsprechend kann durch die Auswertung der Mehrzahl an Messwerten für verschiedene Ausrichtungen des Objekts 440 relativ zu dem magnetischen Erregerfeld 411, die Ausrichtung des Objekts 440 bestimmt werden. Besteht das Objekt 440 aus mehreren gleichartigen Teilobjekten, kann derart z.B. auch bestimmt werden, ob die Teilobjekte alle gleich oder verschieden ausgerichtet sind.

Wie oben bereits angedeutet, ist das magnetische Antwortfeld 411 insbesondere durch oberflächennahe Bereiche (im Inneren) des Objekts 440 bestimmt. Die Vorrichtung 400 kann daher auch zum Bestimmen einer Dicke einer Beschichtung des Objekts 440 gemäß den oben genannten Grundsätzen verwendet werden.

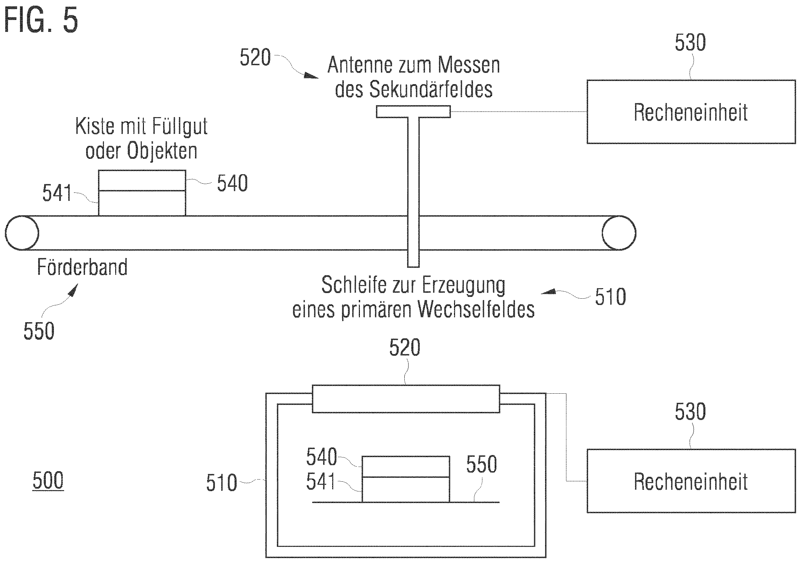

Weitere Details und Aspekte der Vorrichtung 400 als auch des Objekts 440 sind in Zusammenhang mit weiteren Ausführungsbeispielen (z.B. Figs. 1 und 5) beschrieben. Die Vorrichtung 400, seine einzelnen Module als auch das Objekt 440 können eines oder mehrere optionale Merkmale gemäß den weiteren Ausführungsbeispielen umfassen.

Fig. 5 zeigt ein weiteres Ausführungsbeispiel einer Vorrichtung 500 zum Charakterisieren eines Objekts, wobei das Objekt der Inhalt 541 eines Lagerbehälters 540 ist. Die Vorrichtung 500 ist dabei sowohl längs seiner Erstreckung gezeigt (oberer Bereich von Fig. 5) als auch von vorne (unterer Bereich von Fig. 5).

Die Vorrichtung 500 umfasst eine Spule bzw. eine Leiterschleife 510 welche als Erregermodul dient. Die Spule 510 erzeugt ein magnetisches Wechselfeld.

Ferner umfasst die Vorrichtung 500 eine Antenne bzw. eine Empfangsspule 520, welche als Messmodul dient. Die Antenne 520 befindet sich räumlicher Nähe zu Spule 510. Mit der Antenne 520 ist eine Recheneinheit 530 gekoppelt, welche als Auswertemodul dient.

Der Lagerbehälter 540 mitsamt seines Inhalts 541 wird über ein Förderband 550 durch die Spule 510 bewegt.

Bewegt sich der Behälter 540 durch das von der Spule 510 erzeugte magnetische Wechselfeld, so unterscheidet sich das vom Füllgut 541 erzeugte Sekundärfeld (magnetisches Antwortfeld) in Phase und Amplitude je nach Füllstand und Art des Füllguts. So erzeugen z.B. kurze Schrauben eine andere Phasenlage als lange Schrauben. Die Füllmenge hat Einfluss auf die Amplitude des Sekundärfeldes. Auch der Amplitudengang und der Phasengang über die Frequenz des magnetischen Wechselfeldes der Spule 510 sind für voneinander verschiedene Objekte unterschiedlich. Aus dem frequenzabhängigen, komplexen Sekundärfeld der Objekte kann somit auf die Art und erfindungsgemäß auf die Menge des Objekts bzw. des Füllguts 541 geschlossen werden.

Auch die Ausrichtung des Füllguts 541 spiegelt sich in Amplitudengang und Phasengang des Sekundärfeldes wieder. Wenn es bei dem Füllgut um ein einzelnes Objekt handelt, so lässt sich durch die Auswertung des komplexen Sekundärfeldes die Ausrichtung des Objekts bestimmen. Besteht das Füllgut 541 aus mehreren gleichartigen Objekten, so lässt sich in nicht erfindungsgemäße Ausführungsbeispielen beispielsweise prüfen, ob diese identisch ausgerichtet sind.

Das komplexe Sekundärfeld wird durch die Empfangsspule 520 in der Nähe gemessen. Wie durch die Fig. 5 angedeutet, kann dies z.B. in der Lagerhaltung oder beim Kommissionieren durch eine Prüfstation realisiert werden. Derart kann z.B. überprüft werden, ob die richtigen Utensilien in einem Behälter sind oder eine Nachlieferung nötig ist, weil der Bestand einer Ware zu Neige geht. Neben Schüttgut (beispielsweise Schrauben) können auch feste Objekte identifiziert werden. Die Objekte können z.B. größere, teilweise leitfähige oder magnetische Bauteile sein (z.B. Ersatzakkumulator für einen elektrischen Schraubendreher). Die zu erfassenden Objekte müssen dabei lediglich in der Lage sein, das Sekundärfeld in Amplitude und/oder Phase zu beeinflussen.

Durch Beimischung von magnetisch permeablen oder leitfähigen Partikeln zu z.B. einer Beschichtung ist es in nicht erfindungsgemäße Ausführungsbeispielen auch möglich induktionsunabhängige Eigenschaften wie z.B. die Farbe einer Lackschicht zu kodieren.

Ferner lässt sich in nicht erfindungsgemäße Ausführungsbeispielen auch bestimmen, ob das Füllgut 541 im Behälter 540 aus verschiedenen Objekten besteht. So kann z.B. erkannt werden, ob sich Schrauben unterschiedlicher Längen im Behälter 540 befinden.

Die in Fig. 5 gezeigte Vorrichtung wird dazu mit entsprechenden Referenzobjekten oder Simulationen angelernt, um eine Datenbank mit Referenzmesswerten vorzuhalten.

Wenn nun der Behälter 540 mit einem elektrisch leitfähigen oder magnetisch permeablen Füllgut 541 (z.B. Schrauben) durch die mit Wechselstrom durchflossenen Schleife 510 fährt, so erzeugt die stromdurchflossene Schleife 510 ein magnetisches Wechselfeld. Das Füllgut 541 reagiert durch induzierte Ströme oder durch die Permeabilität des Materials auf das magnetische Primärfeld und prägt seinerseits ein Sekundärfeld aus. Dieses Sekundärfeld wird von den Antennen 520, die sich in der Nähe der Stromschleife 510 befinden, gemessen.

Die Materialart und Form der Objekte beeinflussen sowohl die Amplitude als auch die Phasenlage des Sekundärstromes. Durch vorheriges Einmessen bzw. Simulieren der Sekundärfelder von unterschiedlichen Materialien und Objekten, kann nun durch die Recheneinheit 530 unter Berücksichtigung der Position des Lagerbehälters 540 bzw. des Füllguts 540 eine Klassifizierung der Objekte anhand dieser Einmess- bzw. Simulationsergebnisse vorgenommen werden. Die Klassifizierung kann sich dabei z.B. nach dem Phasengang des Sekundärfeldes beim Variieren der Frequenz des Primärstroms richten. Da die Amplitude des von den Antennen 520 gemessenen Sekundärfeldes hauptsächlich vom Füllstand des Schüttguts abhängt, kann auch der Amplitudengang des Sekundärfeldes beim Variieren der Frequenz des Primärstroms analysiert werden. Je höher der Füllstand, desto höher die Sekundärfeld-Amplitude - desto höher das in der Antenne 520 gemessene Sekundärfeld.

Wird ein dreidimensionaler Fingerabdruck des Objekts benötigt, um in nicht erfindungsgemäße Ausführungsbeispielen z.B. die Ausrichtung des Objekts zu schätzen, sind verschiedene Realisierungen möglich. Einerseits kann die Vorrichtung 500 so konstruiert sein, dass das zu untersuchende Objekt (d.h. der Inhalt des Behälters 540) durch mechanisches Bewegen oder Verdrehen von Erregerschleife 510 und Messantenne 520 aus verschiedenen Raumwinkeln beobachtet werden kann. Andererseits lässt sich die räumliche Ausrichtung des Primärfelds auch rein elektrisch drehen durch intelligentes Verschalten mehrerer orthogonal zueinander angeordneter Spulen 510. Der Schaltungsaufwand für diese Realisierung kann dabei z.B. minimiert werden, wenn die Position des zu untersuchenden Objekts, d.h. der Abstand zwischen dem Behälter 540 mit dem zu untersuchenden Objekt, der Erregerschleife 510 und der Messantennen 520 mit betrachtet wird.

Mit der Vorrichtung 500 können z.B. Behälter im logistischen Umfeld, welche mit metallischem Füllgut gefüllt sind, mittels Magnetfeldern geprüft werden. Es kann dabei sowohl die Art, die Menge, die Zusammensetzung als auch die Ausrichtung des Füllguts bestimmt werden.

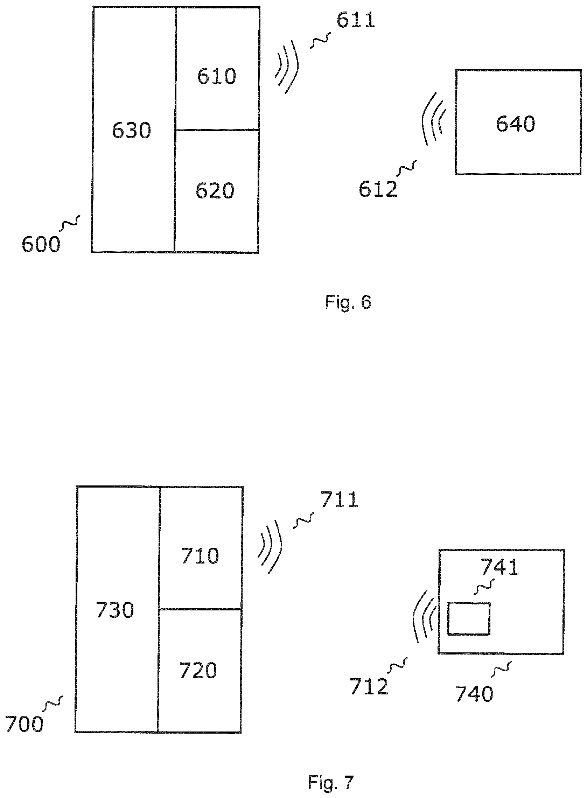

Im Weiteren zeigt Fig. 6 eine nicht erfindungsgemäße Vorrichtung 600 zum Bestimmen einer Zusammensetzung eines Objekts 640. Die Vorrichtung 600 umfasst ein Erregermodul 610, das eingerichtet ist, ein magnetisches Erregerfeld 611 zu erzeugen. Das magnetische Erregerfeld 611 ist dabei eingerichtet, ein Material des Objekts 640 zum Ausprägen eines magnetischen Antwortfeldes 612 anzuregen. Ferner umfasst die Vorrichtung 600 ein Messmodul 620, das eingerichtet ist, zumindest einen Messwert für das magnetische Antwortfeld 612 zu bestimmen. Die Vorrichtung 600 umfasst weiterhin ein Auswertemodul 630, das eingerichtet ist, eine Art des Materials und/oder einen Anteil des Materials an dem Objekt 640 basierend auf einem Vergleich des zumindest einen Messwerts mit Referenzmesswerten zu bestimmen. Den Referenzmesswerten ist dabei jeweils eine Art des Materials und/oder ein Anteil des Materials an dem Objekt 640 zugeordnet.

Voneinander verschiedene Materialien erzeugen unterschiedliche magnetische Antwortfelder 611 in Anwesenheit des magnetischen Erregerfeldes 612. Dieses Verhalten wird durch die Vorrichtung 600 genutzt, um das Vorhandensein eines Materials in/an dem Objekt 640 zu bestimmen/nachzuweisen. Derart kann somit die stoffliche Zusammensetzung des Objekts 640 bestimmt werden.

Das Erregermodul 610 kann dabei eingerichtet sein, das magnetische Erregerfeld 611 gemäß den vorbeschriebenen Grundsätzen zu erzeugen und in seiner Umgebung auszuprägen. Ebenso kann das Messmodul 620 kann dabei eingerichtet sein, das magnetische Antwortfeld 612 gemäß den vorbeschriebenen Grundsätzen zu empfangen und zumindest einen Messwert für das magnetische Antwortfeld 612 zu bestimmen. Das Auswertemodul 630 kann eingerichtet sein, die Art des Materials und/oder einen Anteils des Materials an dem Objekt 640 gemäß den vorbeschriebenen Grundsätzen aus dem zumindest einen Messwert und den Referenzmesswerten zu bestimmen.

Das Erregermodul 610, das Messmodul 620 und das Auswertemodul 630 können dabei wie das Erregermodul 410, das Messmodul 420 bzw. das Auswertemodul 430 der Vorrichtung 400 aufgebaut sein bzw. nach denselben Prinzipien das magnetische Erregerfeld 611 erzeugen, den zumindest einen Messwert des magnetischen Antwortfeldes 612 bestimmen oder den zumindest einen Messwert mit den Referenzmesswerten vergleichen. Um Wiederholungen zu vermeiden, so auf die obigen Ausführungen zur Vorrichtung 400 verwiesen.

Für das Bestimmen der Zusammensetzung des Objekts 640 kann optional auch die Position des Objekts 640 berücksichtigt werden, wie dies oben ausgeführt ist. Die Position des Objekts 640 kann z.B. durch eine Messeinrichtung (nicht gezeigt) der Vorrichtung 600 bestimmt werden. Die Messeinrichtung kann dazu jede geeignete Messtechnik verwenden (z.B. Laser, Radar, Bildauswertung etc.).

Durch das Vorhalten der Referenzmesswerte, welchen jeweils die Art des Materials und/oder der Anteil des Materials an dem Objekt zugeordnet ist, kann nicht-invasiv und in Echtzeit die stoffliche Zusammensetzung des Objekts bestimmt werden mittels der Vorrichtung 600.

Die Vorrichtung 600 lässt sich unter anderem zur Prüfung von metallischen Objekten verwenden. Beispielsweise kann mit der Vorrichtung 600 die Zusammensetzung einer Legierung geprüft werden. So kann der Prozentanteil an Metall oder Metall einer bestimmten Art und Legierung geprüft werden.

Ferner ist in Fig. 7 noch eine nicht erfindungsgemäße Vorrichtung 700 zum Erkennen eines elektrisch leitfähigen und/oder magnetisch permeablen Objekts 741 in einem Gegenstand 740 gezeigt. Die Vorrichtung 700 umfasst ein Erregermodul 710, das eingerichtet ist, ein magnetisches Erregerfeld 711 zu erzeugen. Das magnetische Erregerfeld 711 ist dabei eingerichtet, ein elektrisch leitfähiges und/oder magnetisch permeables Objekt 741 in dem Gegenstand 740 zum Ausprägen eines magnetischen Antwortfeldes 712 anzuregen. Ferner umfasst die Vorrichtung 700 ein Messmodul 720, das eingerichtet ist, zumindest einen Messwert für das magnetische Antwortfeld 712 zu bestimmen. Weiterhin umfasst die Vorrichtung 700 ein Auswertemodul 730, das eingerichtet ist, ein Vorhandensein eines elektrisch leitfähigen und/oder magnetisch permeablen Objekts 741 in dem Gegenstand 740 basierend auf einem Vergleich des zumindest einen Messwerts mit Referenzmesswerten zu bestimmen. Die Referenzmesswerte zeigen dabei jeweils das Vorhandensein eines elektrisch leitfähigen und/oder magnetisch permeablen Objekts an.

Das magnetische Antwortfeld 712 des Gegenstands ist verschieden bei An- bzw. Abwesenheit eines elektrisch leitfähigen und/oder magnetisch permeablen Objekts 741 in dem Gegenstand 740. Entsprechend kann durch den Vergleich mit den Referenzmesswert nicht-invasiv und in Echtzeit festgestellt werden, ob der Gegenstand 740 ein elektrisch leitfähiges und/oder magnetisch permeables Objekt enthält. Die Vorrichtung 700 ermöglicht somit eine einfache Prüfung auf das Vorhandensein von metallischen Objekten in einem Gegenstand.

Wie bereits oben angedeutet, kann das Objekt z.B. ein Lebensmittel sein. So kann geprüft werden, ob während des Herstellungsprozesseses Metallteile (z.B. von Produktionsanlagen) in das Lebensmittel gelangt sind. Da die Vorrichtung 700 eine nicht-invasive Prüfung ermöglicht, können so auch bereits verpackte Lebensmittel geprüft werden (z.B. auch durch einen Verkäufer oder Zwischenhändler der Lebensmittel).

Das Erregermodul 710 kann dabei eingerichtet sein, das magnetische Erregerfeld 711 gemäß den vorbeschriebenen Grundsätzen zu erzeugen und in seiner Umgebung auszuprägen. Ebenso kann das Messmodul 720 kann dabei eingerichtet sein, das magnetische Antwortfeld 712 gemäß den vorbeschriebenen Grundsätzen zu empfangen und zumindest einen Messwert für das magnetische Antwortfeld 712 zu bestimmen. Das Auswertemodul 730 kann eingerichtet sein, das Vorhandensein eines elektrisch leitfähigen und/oder magnetisch permeablen Objekts 741 in dem Gegenstand 740 gemäß den vorbeschriebenen Grundsätzen aus dem zumindest einen Messwert und den Referenzmesswerten zu bestimmen.

Für das Bestimmen des Vorhandenseins eines elektrisch leitfähigen und/oder magnetisch permeablen Objekts in dem Gegenstand 740 kann optional auch die Position des Gegenstands 740 berücksichtigt werden, wie dies oben ausgeführt ist. Die Position des Gegenstands 740 kann z.B. durch eine Messeinrichtung (nicht gezeigt) der Vorrichtung 700 bestimmt werden. Die Messeinrichtung kann dazu jede geeignete Messtechnik verwenden (z.B. Laser, Radar, Bildauswertung etc.).

Das Erregermodul 710, das Messmodul 720 und das Auswertemodul 730 können dabei wie das Erregermodul 410, das Messmodul 420 bzw. das Auswertemodul 430 der Vorrichtung 400 aufgebaut sein bzw. nach denselben Prinzipien das magnetische Erregerfeld 711 erzeugen, den zumindest einen Messwert des magnetischen Antwortfeldes 712 bestimmen oder den zumindest einen Messwert mit den Referenzmesswerten vergleichen. Um Wiederholungen zu vermeiden, so auf die obigen Ausführungen zur Vorrichtung 400 verwiesen.

## Patentansprüche

1. Verfahren (100) zum Bestimmen eines Füllstands eines Lagerbehälters, umfassend:
Erzeugen (102) eines magnetischen Erregerfeldes, wobei das magnetische Erregerfeld eingerichtet ist, einen Inhalt des Lagerbehälters zum Ausprägen eines magnetischen Antwortfeldes anzuregen, und wobei das Erzeugen (102) des magnetischen Erregerfeldes ein Variieren einer Frequenz des magnetischen Erregerfeldes umfasst;
Bestimmen (104) einer Mehrzahl an Messwerten für das magnetische Antwortfeld für verschiedene Frequenzen des magnetischen Erregerfeldes umfasst; und
Bestimmen (106) des Füllstands des Lagerbehälters basierend auf einer Position des Lagerbehälters und einem Vergleich der Mehrzahl an Messwerten mit Referenzmesswerten, wobei den Referenzmesswerten jeweils ein Füllstand des Lagerbehälters zugeordnet ist, und wobei das Bestimmen (106) des Füllstands des Lagerbehälters Folgendes umfasst:
Bestimmen eines Phasengangs und/oder eines Amplitudengangs der Mehrzahl an Messwerten über die verschiedenen Frequenzen des magnetischen Erregerfeldes; und
Bestimmen einer Ähnlichkeit des Phasengangs und/oder des Amplitudengangs der Mehrzahl an Messwerten zu einem Phasengang und/oder einem Amplitudengang zumindest eines Teils der Referenzmesswerte über die verschiedenen Frequenzen des magnetischen Erregerfeldes.

2. Verfahren nach Anspruch 1, wobei das Bestimmen (106) des Füllstands des Lagerbehälters Folgendes umfasst:
Bestimmen einer Ähnlichkeit der Mehrzahl an Messwerten zu einem der Referenzmesswerte.

3. Verfahren nach Anspruch 2, wobei das Bestimmen (106) des Füllstands des Lagerbehälters ferner Folgendes umfasst:
Bestimmen desjenigen einem Referenzwert zugeordneten Füllstands als Füllstand des Lagerbehälters, dessen Referenzwert eine größte Ähnlichkeit zu der Mehrzahl an Messwerten aufweist.

4. Das Verfahren nach einem der Ansprüche 2 bis 3, wobei das Bestimmen der Ähnlichkeit der Mehrzahl an Messwerten zu einem der Referenzmesswerte Folgendes umfasst:
Vergleichen einer Amplitude der Mehrzahl an Messwerten mit einer Amplitude eines der Referenzmesswerte; und/oder
Vergleichen einer Phase der Mehrzahl an Messwerten mit einer Phase eines der Referenzmesswerte.

5. Verfahren nach einem der vorhergehenden Ansprüche, wobei das Bestimmen (104) der Mehrzahl an Messwerten für das magnetische Antwortfeld Folgendes umfasst:
Bestimmen der Mehrzahl an Messwerten für das magnetische Antwortfeld für verschiedene Ausrichtungen des Lagerbehälters relativ zu dem magnetischen Erregerfeld.

6. Vorrichtung (500) zum Bestimmen eines Füllstands eines Lagerbehälters (540), umfassend:
ein Erregermodul (510), das eingerichtet ist, ein magnetisches Erregerfeld zu erzeugen, wobei das magnetische Erregerfeld eingerichtet ist, einen Inhalt (541) des Lagerbehälters (540) zum Ausprägen eines magnetischen Antwortfeldes anzuregen, und wobei das Erregermodul (410) eingerichtet ist, eine Frequenz des magnetischen Erregerfeldes (411) zu variieren;
ein Messmodul (520), das eingerichtet ist, eine Mehrzahl an Messwerten für das magnetische Antwortfeld (412) für verschiedene Frequenzen des magnetischen Erregerfeldes (411) zu bestimmen; und
ein Auswertemodul (530), das eingerichtet ist, den Füllstand des Lagerbehälters (540) basierend auf einer Position des Lagerbehälters (540) und einem Vergleich der Mehrzahl an Messwerten mit Referenzmesswerten zu bestimmen, wobei den Referenzmesswerten jeweils ein Füllstand des Lagerbehälters (540) zugeordnet ist, und wobei das Auswertemodul (430) eingerichtet ist, einen Phasengang und/oder einen Amplitudengang der Mehrzahl an Messwerten über die verschiedenen Frequenzen des magnetischen Erregerfeldes (411) zu bestimmen und eine Ähnlichkeit des Phasengangs und/oder des Amplitudengangs der Mehrzahl an Messwerten zu einem Phasengang und/oder einem Amplitudengang von zumindest einem Teil der Referenzmesswerte über die verschiedenen Frequenzen des magnetischen Erregerfeldes (411) zu bestimmen.

7. Vorrichtung nach Anspruch 6, wobei das Auswertemodul (530) ferner eingerichtet ist, eine Ähnlichkeit der Mehrzahl an Messwerten zu einem der Referenzmesswerte zu bestimmen.

8. Vorrichtung nach Anspruch 7, wobei das Auswertemodul (530) ferner eingerichtet ist, denjenigen einem Referenzwert zugeordneten Füllstand als Füllstand des Lagerbehälters zu bestimmen, dessen Referenzwert eine größte Ähnlichkeit zu der Mehrzahl an Messwerten aufweist.

9. Vorrichtung nach einem der Ansprüche 6 bis 8, wobei das Auswertemodul (530) ferner eingerichtet ist, die Ähnlichkeit der Mehrzahl an Messwerten zu einem der Referenzmesswerte basierend auf einem Vergleich einer Amplitude der Mehrzahl an Messwerten mit einer Amplitude eines der Referenzmesswerte und/oder basierend auf einem Vergleich einer Phase der Mehrzahl an Messwerten mit einer Phase eines der Referenzmesswerte zu bestimmen.

10. Vorrichtung nach einem der Ansprüche 6 bis 9, wobei:
die Vorrichtung ausgebildet ist, das Erregermodul (410) und das Messmodul (420) relativ zu dem Lagerbehälter (540) zu bewegen, oder
das Erregermodul (410) eine Mehrzahl an orthogonal zu einander angeordneten Spulen sowie eine Steuerschaltung umfasst, wobei die Steuerschaltung eingerichtet ist, die Mehrzahl an Spulen anzusteuern, um eine räumliche Ausrichtung des magnetischen Erregerfelds (411) relativ zu dem Lagerbehälter (540) zu ändern; und
das Messmodul (420) eingerichtet ist, die Mehrzahl an Messwerten für das magnetische Antwortfeld (412) für verschiedene Ausrichtungen des Lagerbehälters (540) relativ zu dem magnetischen Erregerfeld (411) zu bestimmen.

## Claims

1. A method (100) for determining a filling level of a storage container, comprising:
generating (102) a magnetic excitation field, wherein the magnetic excitation field is configured to excite a content of the storage container to develop a magnetic response field, and wherein generating (102) the magnetic excitation field comprises varying a frequency of the magnetic excitation field;
determining (104) a plurality of measurement values for the magnetic response field for different frequencies of the magnetic excitation field; and
determining (106) the filling level of the storage container based on a position of the storage container and a comparison of the plurality of measurement values to reference measurement values, wherein a filling level of the storage container is associated with each of the reference measurement values, and wherein determining (106) the filling level of the storage container comprises:
determining a phase response and/or an amplitude response of the plurality of measurement values across the different frequencies of the magnetic excitation field; and
determining a similarity of the phase response and/or the amplitude response of the plurality of measurement values to a phase response and/or an amplitude response of at least a part of the reference measurement values over the different frequencies of the magnetic excitation field.

2. The method of claim 1, wherein determining (106) the filling level of the storage container comprises:
determining a similarity of the plurality of measurement values to one of the reference measurement values.

3. The method of claim 2, wherein determining (106) the filling level of the storage container further comprises:
determining the filling level associated with a reference value as the filling level of the storage container whose reference value has a greatest similarity to the plurality of measurement values.

4. The method of any one of claims 2 to 3, wherein determining the similarity of the plurality of measurement values to one of the reference measurement values comprises:
comparing an amplitude of the plurality of measurement values with an amplitude of one of the reference measurement values; and/or
comparing a phase of the plurality of measurement values to a phase of one of the reference measurement values.

5. The method of any one of the preceding claims, wherein determining (104) the plurality of measurement values for the magnetic response field comprises:
determining the plurality of measurement values for the magnetic response field for different orientations of the storage container relative to the magnetic excitation field.

6. An apparatus (500) for determining a filling level of a storage container (540), comprising:
an excitation module (510) configured to generate a magnetic excitation field, wherein the magnetic excitation field is configured to excite a content (541) of the storage container (540) to develop a magnetic response field, and wherein the excitation module (410) is configured to vary a frequency of the magnetic excitation field (411);
a measurement module (520) configured to determine a plurality of measurement values for the magnetic response field (412) for different frequencies of the magnetic excitation field (411); and
an evaluation module (530) configured to determine the filling level of the storage container (540) based on a position of the storage container (540) and a comparison of the plurality of measurement values with reference measurement values, wherein a filling level of the storage container (540) is associated with each of the reference measurement values, and wherein the evaluation module (430) is configured to determine a phase response and/or an amplitude response of the plurality of measurement values over the different frequencies of the magnetic excitation field (411) and a similarity of the phase response and/or the amplitude response of the plurality of measurement values to a phase response and/or an amplitude response of at least a part of the reference measurement values over the different frequencies of the magnetic excitation field (411).

7. The apparatus of claim 6, wherein the evaluation module (530) is further configured to determine a similarity of the plurality of measurement values to one of the reference measurement values.

8. The apparatus of claim 7, wherein the evaluation module (530) is further configured to determine the filling level associated with a reference value as the filling level of the storage container whose reference value has a greatest similarity to the plurality of measurement values..

9. The apparatus of any one of claims 6 to 8, wherein the evaluation module (530) is further configured to determine the similarity of the plurality of measurement values to one of the reference measurement values based on a comparison of an amplitude of the plurality of measurement values to an amplitude of one of the reference measurement values and/or based on a comparison of a phase of the plurality of measurement values to a phase of one of the reference measurement values.

10. The apparatus of any one of claims 6 to 9, wherein:
the apparatus is configured to move the excitation module (410) and the measurement module (420) relative to the storage container (540), or
the excitation module (410) comprises a plurality of coils arranged orthogonally to each other and a control circuit, wherein the control circuit is configured to drive the plurality of coils in order to change a spatial orientation of the magnetic excitation field (411) relative to the storage container (540); and
the measurement module (420) is configured to determine the plurality of measurement values for the magnetic response field (412) for different orientations of the storage container (540) relative to the magnetic excitation field (411).

## Revendications

1. Procédé (100) pour déterminer un niveau de remplissage d'un récipient de stockage, comprenant le fait de :
générer (102) un champ d'excitation magnétique, dans lequel le champ d'excitation magnétique est configuré pour exciter un contenu du récipient de stockage afin de développer un champ de réponse magnétique, et dans lequel le fait de générer (102) le champ d'excitation magnétique comprend le fait de varier une fréquence du champ d'excitation magnétique ;
déterminer (104) une pluralité de valeurs mesurées du champ de réponse magnétique pour différentes fréquences du champ d'excitation magnétique ; et
déterminer (106) le niveau de remplissage du récipient de stockage sur la base d'une position du récipient de stockage et d'une comparaison de la pluralité de valeurs mesurées avec des valeurs mesurées de référence, chaque valeur mesurée de référence étant affectée à un niveau de remplissage du récipient de stockage, et dans lequel le fait de déterminer (106) le niveau de remplissage du récipient de stockage comprend le fait de :
déterminer une réponse en phase et/ou une réponse en amplitude de la pluralité de valeurs mesurées sur les différentes fréquences du champ d'excitation magnétique ; et
déterminer une similarité de la réponse en phase et/ou de la réponse en amplitude de la pluralité de valeurs mesurées à une réponse en phase et/ou une réponse en amplitude d'au moins une partie des valeurs mesurées de référence sur les différentes fréquences du champ d'excitation magnétique.

2. Procédé selon la revendication 1, dans lequel le fait de déterminer (106) le niveau de remplissage du récipient de stockage comprend le fait de :
déterminer une similarité de la pluralité de valeurs mesurées avec l'une des valeurs mesurées de référence.

3. Procédé selon la revendication 2, dans lequel le fait de déterminer (106) le niveau de remplissage du récipient de stockage comprend le fait de :
déterminer ce niveau de remplissage associé à une valeur de référence en tant que niveau de remplissage du récipient de stockage dont la valeur de référence est la plus similaire à la pluralité de valeurs mesurées.

4. Procédé selon l'une des revendications 2 à 3, dans lequel le fait de déterminer la similarité de la pluralité de valeurs mesurées avec l'une des valeurs mesurées de référence comprend le fait de :
comparer une amplitude de la pluralité de valeurs mesurées avec une amplitude de l'une des valeurs mesurées de référence : et/ou
comparer une phase de la pluralité de valeurs mesurées avec une phase de l'une des valeurs mesurées de référence.

5. Procédé selon l'une des revendications précédentes, dans lequel le fait de déterminer (104) la pluralité de valeurs mesurées du champ de réponse magnétique comprend le fait de
déterminer la pluralité de valeurs mesurées du champ de réponse magnétique pour différentes orientations du récipient de stockage par rapport au champ d'excitation magnétique.

6. Dispositif (500) pour déterminer un niveau de remplissage d'un récipient de stockage (540), comprenant :
un module d'excitation (510) qui est configuré pour générer un champ d'excitation magnétique, dans lequel le champ d'excitation magnétique est configuré pour exciter un contenu (541) du récipient de stockage (540) pour développer un champ de réponse magnétique, et dans lequel le module d'excitation (410) est configuré pour varier une fréquence du champ d'excitation magnétique (411);
un module de mesure (520) qui est configuré pour déterminer une pluralité de valeurs mesurées du champ de réponse magnétique (412) pour différentes fréquences du champ d'excitation magnétique (411) ; et
un module d'évaluation (530) qui est configuré pour déterminer le niveau de remplissage du récipient de stockage (540) sur la base d'une position du récipient de stockage (540) et d'une comparaison de la pluralité de valeurs mesurées avec des valeurs mesurées de référence, dans lequel les valeurs mesurées de référence sont affectées chacune d'un niveau de remplissage du récipient de stockage (540), et dans lequel le module d'évaluation (430) est configuré pour déterminer une réponse en phase et/ou une réponse en amplitude de la pluralité de valeurs mesurées sur les différentes fréquences du champ d'excitation magnétique (411), et une similarité de la réponse en phase et/ou de la réponse en amplitude de la pluralité de valeurs mesurées à une réponse en phase et/ou une réponse en amplitude d'au moins une partie des valeurs mesurées de référence sur les différentes fréquences du champ d'excitation magnétique (411).

7. Dispositif selon la revendication 6, dans lequel le module d'évaluation (530) est en outre configuré pour déterminer une similarité de la pluralité de valeurs mesurées avec l'une des valeurs mesurées de référence.

8. Dispositif selon la revendication 7, dans lequel le module d'évaluation (530) est en outre configuré pour déterminer ce niveau de remplissage associé à une valeur de référence en tant que niveau de remplissage du récipient de stockage dont la valeur de référence est la plus similaire à la pluralité de valeurs mesurées.

9. Dispositif selon l'une des revendications 6 à 8, dans lequel le module d'évaluation (530) est en outre configuré pour déterminer la similarité de la pluralité de valeurs mesurées avec l'une des valeurs mesurées de référence sur la base d'une comparaison d'une amplitude de la pluralité de valeurs mesurées avec une amplitude de l'une des valeurs mesurées de référence et/ou sur la base d'une comparaison d'une phase de la pluralité de valeurs mesurées avec une phase de l'une des valeurs mesurées de référence.

10. Dispositif selon l'une des revendications 6 à 9, dans lequel :
le dispositif est configuré pour déplacer le module excitation (410) et le module de mesure (420) par rapport au récipient de stockage (540), ou
le module excitation (410) comprend une pluralité de bobines agencées orthogonalement les unes aux autres et un circuit de commande, dans lequel le circuit de commande est configuré pour piloter la pluralité de bobines afin de modifier une orientation spatiale du champ d'excitation magnétique (411) par rapport au récipient de stockage (540) ; et
le module de mesure (420) est configuré pour déterminer la pluralité de valeurs mesurées pour le champ de réponse magnétique (412) pour différentes orientations du récipient de stockage (540) par rapport au champ d'excitation magnétique (411).
